# EUROPEAN PATENT APPLICATION

(11) **EP 4 704 397 A1**
(43) Date of publication of application: **04.03.2026**
(21) Application number: 25199164.2
(22) Date of filing: 29.08.2025
(51) Int. Cl.: H04L 45/247, H04L 45/28, H04L 45/302, H04L 45/58, H04L 45/74

(54) **EFFICIENT POLICY HANDLING IN HIGH AVAILABILITY NETWORK**

(30) Priority: 29.08.2024 US 202463688435 P; 23.01.2025 US 202519035055
(71) Applicant: Cisco Technology, Inc., San Jose, CA 95134-1706 (US)
(72) Inventor: MANICKAM, Arul Murugan, San Jose, CA 95132 (US); BARUAH, Pritam, Fremont, CA 94555 (US); SHAH, Avinash, Pleasanton, CA 94588 (US); BHASHAM, Sampath Sthothra, Santa Clara, CA 95051 (US)
(74) Representative: Mathys & Squire

(57) **Abstract**

In one aspect, a method includes receiving, at a first router, a data packet from a network device via a communication channel, executing, by the first router, a policy lookup for the data packet to determine a policy action for handling the data packet, including, by the first router, the policy action in a header of the data packet, and transmitting, by the first router, the data packet to a second router where the second router processes the data packet based on the policy action included in the header of the data packet.

## Description

### CROSS-REFERENCE TO RELATED APPLICATIONS

This application claims the benefit of priority to U.S. Provisional application number 63/688,435, filed on August 29, 2024, which is expressly incorporated by reference herein in its entirety.

### BACKGROUND

Software-defined wide area network (SDWAN) policy can be complex. For example, in SDWAN network address translation (NAT), there are multiple NAT methods and each application may require different NAT methods (i.e., some applications need interface overload and other applications may need NAT based on pools). In some cases, there can be multiple NAT pools and based on a policy one of NAT pool would be used. For example, a requirement could be to choose a NAT method based on an application-aware policy. With box-to-box (B2B) high availability (HA) on the active router a direct internet access (DIA) packet may be processed/NAT translated. The standby router would be in hot-standby and ready to take over traffic in case the active router fails.

If the packet towards the DIA is received on HA standby, the packet may be peer diverted to the HA active router for DIA by NAT after policy lookup in a packet processing pipeline. On the HA active router, to process the packet, another policy lookup is needed for the NAT action. Here, two policy lookups are occurring - one at a standby router, and one at an active router.

### BRIEF DESCRIPTION OF THE SEVERAL VIEWS OF THE DRAWINGS

Details of one or more aspects of the subject matter described in this disclosure are set forth in the accompanying drawings and the description below. However, the accompanying drawings illustrate only some typical aspects of this disclosure and are therefore not to be considered limiting of its scope. Other features, aspects, and advantages will become apparent from the description, the drawings and the claims.
FIG. 1 illustrates an example communication network including one or more autonomous systems (ASes) in accordance with some aspects of the present disclosure.
FIG. 2 illustrates an example of a high-level network architecture in accordance with some aspects of the present disclosure.
FIG. 3 illustrates an example of packet routing in an HA cluster in accordance with some aspects of the present disclosure.
FIG. 4 illustrates another example of packet routing in an HA cluster in accordance with some aspects of the present disclosure.
FIG. 5 illustrates a packet policy lookup method in an HA cluster in accordance with some aspects of the present disclosure.
FIG. 6 shows an example network device in accordance with some aspects of the present disclosure.

### DETAILED DESCRIPTION

The detailed description set forth below is intended as a description of various configurations of embodiments and is not intended to represent the only configurations in which the subject matter of this disclosure can be practiced. The appended drawings are incorporated herein and constitute a part of the detailed description. The detailed description includes specific details for the purpose of providing a more thorough understanding of the subject matter of this disclosure. However, it will be clear and apparent that the subject matter of this disclosure is not limited to the specific details set forth herein and may be practiced without these details. In some instances, structures and components are shown in block diagram form in order to avoid obscuring the concepts of the subject matter of this disclosure.

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

As used herein the term "configured" shall be considered to interchangeably be used to refer to configured and configurable, unless the term "configurable" is explicitly used to distinguish from "configured". The proper understanding of the term will be apparent to persons of ordinary skill in the art in the context in which the term is used.

Claim language or other language reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### OVERVIEW

Aspects of the invention are set out in the independent claims and preferred features are set out in the dependent claims. Features of one aspect may be applied to each aspect alone or in combination with other features.

Aspects of the present disclosure eliminate redundant policy lookups during packet handling by one or more routers of a HA cluster. In SDWAN NAT, there are multiple NAT methods and different applications may require different NAT methods. For example, some applications need interface overload, while others need NAT based on pools. In some examples, a HA cluster may be associated with multiple NAT pools, and a NAT pool may be chosen for handling a packet based on an application-aware policy. Aspects of the present disclosure eliminate the need for redundant policy lookups in a packet processing pipeline when transferring a packet between a HA standby router and a HA active router.

In one aspect, a method includes receiving, at a first router, a data packet from a network device via a communication channel; executing, by the first router, a policy lookup for the data packet to determine a policy action for handling the data packet; including, by the first router, the policy action in a header of the data packet; and transmitting, by the first router, the data packet to a second router where the second router processes the data packet based on the policy action included in the header of the data packet.

In an aspect, the policy action is included in an A/R divert header of the data packet.

In an aspect, a NAT module of the first router is configured to append the policy action to the header of the data packet.

In an aspect, processing the data packet by the second router includes using the policy action by a NAT module of the second router to route the data packet.

In an aspect, the first router is in an active state and the second router is in a standby state.

In an aspect, transmitting, by the first router, the data packet to the second router is determined based on a NAT pool state of the first router.

In an aspect, the second router processes the data packet based on the policy action without executing an additional policy lookup for the data packet.

In another aspect, a router includes at least one memory configured to store computer-readable instructions; and one or more processors configured to execute the computer-readable instructions to: receive a data packet from a network device via a communication channel; execute a policy lookup for the data packet to determine a policy action for handling the data packet; include the policy action in a header of the data packet; and transmit the data packet to a remote router, where the remote router is configured to: process the data packet based on the policy action included in the header of the data packet.

In another aspect, one or more non-transitory computer-readable storage media include computer-readable instructions that, when executed by one or more processors of a router, cause the router to: receive a data packet from a network device via a communication channel; execute a policy lookup for the data packet to determine a policy action for handling the data packet; include the policy action in a header of the data packet; and transmit the data packet to a remote router, where the remote router is configured to: process the data packet based on the policy action included in the header of the data packet.

### EXAMPLE EMBODIMENTS

The disclosed technology addresses the need in the art for a packet processing pipeline in which redundant policy lookups do not need to be executed when transferring a packet between a HA standby router and an HA active router in a HA cluster. By performing a policy lookup at a first router and including a policy action in a header of a data packet for transmittal to a second router, the second router can parse the header to determine the policy action based on the policy action included in the header of the data packet and without performing a second policy lookup for the data packet. Advantages of the disclosed technology include increased packet processing efficiency, improved HA cluster performance, reduced overhead, and reduced computational cost.

A computer network is a geographically distributed collection of nodes interconnected by communication links and segments for transporting data between end nodes, such as personal computers and workstations, or other network devices, such as sensors, etc. Many types of networks are available, ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links. The Internet is an example of a WAN that connects disparate networks throughout the world, providing global communication between nodes on various networks. The nodes typically communicate over the network by exchanging discrete frames or packets of data according to predefined protocols, such as the Transmission Control Protocol/Internet Protocol (TCP/IP). In this context, a protocol consists of a set of rules defining how the nodes interact with each other.

Since management of interconnected computer networks can prove burdensome, smaller groups of computer networks may be maintained as routing domains or autonomous systems. An Autonomous System (AS) is a network or group of networks under common administration and with common routing policies. A typical example of an AS is a network administered and maintained by an Internet Service Provider (ISP). Customer networks, such as universities or corporations, connect to the ISP, and the ISP routes the network traffic originating from the customer networks to network destinations that may be in the same ISP or may be reachable only through other ISPs.

To facilitate the routing of network traffic through one or more ASes, the network elements of the ASes need to exchange routing information to various network destinations. Border Gateway Protocol (BGP) is an Exterior Gateway Protocol (EGP) that is used to exchange routing information among network elements (e.g., routers) in the same or different ASes. A computer host that executes a BGP process is typically referred to as a BGP host or a BGP network device. To exchange BGP routing information, two BGP hosts, or peers, first establish a transport protocol connection with one another. Initially, the BGP peers exchange messages to open a BGP session, and, after the BGP session is open, the BGP peers exchange their entire routing information. Thereafter, only updates or changes to the routing information are exchanged, or advertised, between the BGP peers. The exchanged routing information is maintained by the BGP peers during the existence of the BGP session.

The networks within an AS are typically coupled together by conventional "intradomain" routers configured to execute intradomain routing protocols, and are generally subject to a common authority. To improve routing scalability, a service provider (e.g., an ISP) may divide an AS into multiple "areas" or "levels." It may be desirable, however, to increase the number of nodes capable of exchanging data; in this case, interdomain routers executing interdomain routing protocols are used to interconnect nodes of the various ASes. Moreover, it may be desirable to interconnect various ASes that operate under different administrative domains. As used herein, an AS, area, or level is generally referred to as a "domain."

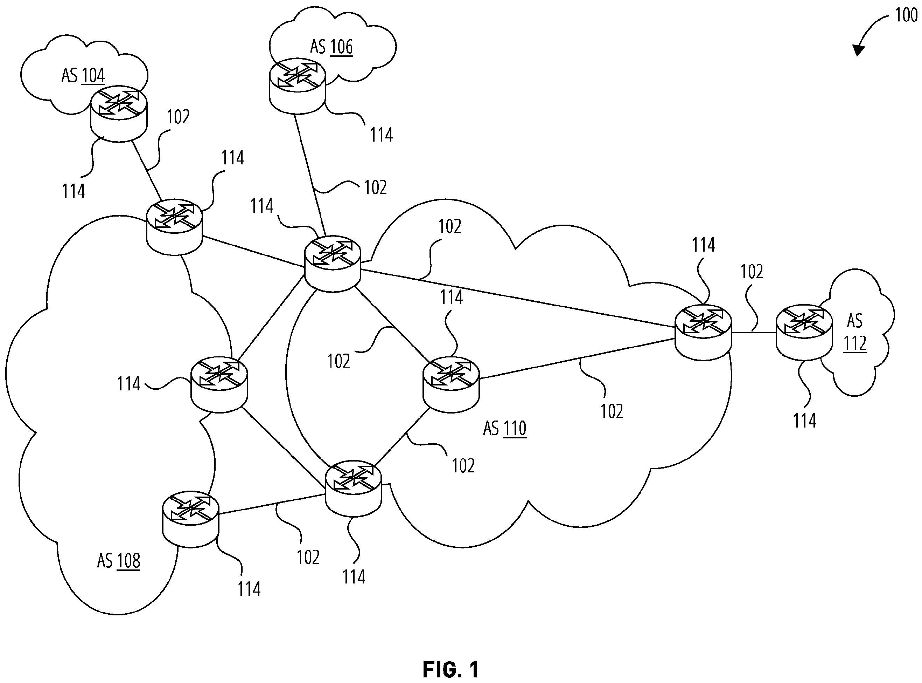

FIG. 1 illustrates an example communication network including one or more autonomous systems (ASes) in accordance with some aspects of the present disclosure. FIG. 1 is a schematic block diagram of an example communication network 100. Communication network 100 may include a set of autonomous systems (AS) such as AS 104, AS 106, AS 108, AS 110, and AS 112. Each AS may be associated with one or more network devices such as network devices 114 interconnected by various methods of communication. For instance, links 102 may be any suitable combination of wired links and shared media (e.g., wireless links, Internet Exchange Points, etc.) via which network devices 114 may be connected to one another. Network devices 114 may be any type of known or to be developed device capable of connecting to and operating in a network including, but not limited to, routers, computers, etc. Configuration of communication network 100 and consequently types and numbers of network devices such as network devices 114 and links 102, as shown in FIG. 1, are merely exemplary and shown in a simplified manner for ease of understanding and thus are non-limiting.

Data packets (e.g., traffic and/or messages sent between network devices 114) may be exchanged among network devices 114 of communication network 100 using known or to be developed network communication protocols (e.g., wired and/or wireless protocols, shared-media protocols, etc.)

Communication network 100 may be positioned in any suitable network environment or communications architecture that operates to manage or otherwise direct information using any appropriate routing protocol or data management standard. For example, communication network 100 may be provided in conjunction with a border gateway protocol (BGP).

As noted above, an AS may be a collection of connected Internet Protocol (IP) routing network devices such as network devices 114 under the control of one or more network operators that presents a common, clearly defined routing policy to a network (e.g., the Internet). Usually, an AS comprises network devices 114 that are established on the edge of the system, and that serve as the system's ingress and egress points for network traffic. Accordingly, network devices 114 may be considered edge network devices, border routers, or core network devices within the respective AS. These network devices typically, but not always, are routers or any other element of network infrastructure suitable for switching or forwarding data packets according to a routing protocol or switching protocol. For the purposes of the present disclosure, network devices 114 located within an AS may alternatively be referred to as "forwarding network devices" or "intermediate network devices." Moreover, for illustration purposes, AS 104, AS 106, AS 108, AS 110, and AS 112 are shown with a limited number of network devices such as network devices 114. However, the present disclosure is not limited thereto, and each AS may include more or less network devices than that shown in FIG. 1.

Each one of AS 104, AS 106, AS 108, AS 110, and AS 112 may be associated with an Internet Service provider (ISP). Even though there may be multiple ASes supported by a single ISP, the Internet only sees the routing policy of the ISP. That ISP must have an officially registered Autonomous System Number (ASN). As such, a unique ASN is allocated to each AS for use in BGP routing. ASNs are important primarily because they uniquely identify each network on the Internet.

To facilitate the routing of network traffic through the ASes, or more specifically, network devices 114 within the ASes, the network devices may exchange routing information to various network destinations. As described above, BGP may be used to exchange routing and reachability information among network devices 114 within a single AS or between different ASes. One example of BGP is BGPv4, as defined in Request for Comments (RFC) 1771 of the Internet Engineering Task Force (IETF). The BGP logic of a router may be used by the data collectors to collect BGP AS path information, e.g., the "AS_PATH" attribute, as described further below, from BGP tables of border routers of an AS, to construct paths to prefixes.

To exchange BGP routing information, two BGP hosts (network devices 114), or peers, first establish a transport protocol connection with one another. Initially, the BGP peers exchange messages to open a BGP session, and, after the BGP session is open, the BGP peers exchange their entire routing information. Thereafter, in certain embodiments, only updates or changes to the routing information, e.g., the "BGP UPDATE" attribute, are exchanged, or advertised, between the BGP peers. The exchanged routing information is maintained by the BGP peers during the existence of the BGP session.

The BGP routing information may include the complete route to each network destination, e.g., "destination network device," that is reachable from a BGP host. A route, or path, comprises an address destination, which is usually represented by an address prefix (also referred to as prefix), and information that describe the path to the address destination. The address prefix may be expressed as a combination of a network address and a mask that indicates how many bits of the address are used to identify the network portion of the address. In Internet Protocol version 4 (IPv4) addressing, for example, the address prefix can be expressed as "9.2.0.2/16". The "/16" indicates that the first 16 bits are used to identify the unique network leaving the remaining bits in the address to identify the specific hosts within this network.

A path joining a plurality of ASes, e.g., links 102, may be referred to as an "AS_PATH." The AS_PATH attribute indicates the list of ASes that must be traversed to reach the address destination. For example, as illustrated in FIG. 1, AS 112 may store an AS_PATH attribute of "104 106 110 112" where the address destination is AS 112 (or a particular IP address within AS 112). Here, the AS_PATH attribute indicates that the path to the address destination of AS 112 from AS 108 passes through AS 104, AS 106 and AS 110, in that order.

Although it may be preferable that all network devices 114 in the respective one of AS 104, AS 106, AS 108, AS 110, and AS 112 be configured according to BGP, in a real-world implementation, it may be unlikely that each network device communicates using BGP. Thus, the disclosed embodiments are applicable to scenarios where all network devices 114 in the communication network 100 are configured according to BGP, as well as scenarios where only a subset of network devices (e.g., network devices 114) is/are configured as such. Moreover, between any of the ASes, there may be a single communication path via one of links 102, e.g., between AS 104 and AS 108, as shown in FIG. 1, or there may be multiple communication paths via links 102, e.g., between AS 108 and AS 110. Thus, the disclosed examples are applicable to both cases, as described in further detail below.

Moreover, a security extension to the BGP has been developed, referred to as BGPSEC, which provides improved security for BGP routing. BGP does not include mechanisms that allow an AS to verify the legitimacy and authenticity of BGP route advertisements. The Resource Public Key Infrastructure (RPKI) provides a first step towards addressing the validation of BGP routing data. BGPSEC extends the RPKI by adding an additional type of certificate, referred to as a BGPSEC router certificate, that binds an AS number to a public signature verification key, the corresponding private key of which is held by one or more BGP speakers within this AS. Private keys corresponding to public keys in such certificates can then be used within BGPSEC to enable BGP speakers to sign on behalf of their AS. The certificates thus allow a relying party to verify that a BGPSEC signature was produced by a BGP speaker belonging to a given AS. Thus, a goal of BGPSEC is to use signatures to protect the AS Path attribute of BGP update messages so that a BGP speaker can assess the validity of the AS Path in update messages that it receives. It should be understood, however, that the embodiments for implementing AS Path security disclosed herein are not limited to BGPSEC; certain embodiments may, additionally or alternatively, be applicable to other suitable protocols, including, for example, SoBGP, S-BGP, and PGPBGP, to name just a few.

Furthermore, the present disclosure is not limited to BGPv4 or more generally BGP being used for exchanging route and reachability information. Any other known or to be developed route and reachability information exchange mechanism and protocol may be used and thus falls within the scope of the present disclosure.

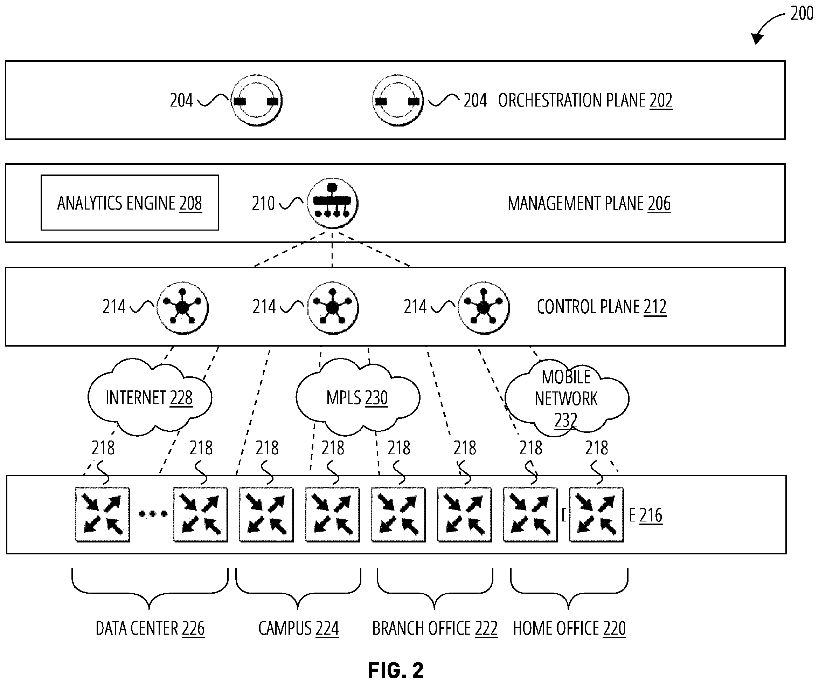

FIG. 2 illustrates an example of a high-level network architecture in accordance with some aspects of the present disclosure. A non-limiting example of an implementation of network architecture 200 shown in FIG. 2 is the Cisco^{®} SD-WAN architecture. However, one of ordinary skill in the art will understand that, for network architecture 200 and any other system discussed in the present disclosure, there can be additional or fewer component in similar or alternative configurations. The illustrations and examples provided in the present disclosure are for conciseness and clarity. Other embodiments may include different numbers and/or types of elements but one of ordinary skill the art will appreciate that such variations do not depart from the scope of the present disclosure.

In this example, network architecture 200 can comprise an orchestration plane 202, a management plane 206, a control plane 212, and a data plane 216. Orchestration plane 202 can assist in the automatic on-boarding of edge network devices 218 (e.g., switches, routers, etc.) in an overlay network. Orchestration plane 202 can include one or more physical or virtual network orchestrator appliances such as network orchestrator appliances 204. Network orchestrator appliances 204 can perform the initial authentication of edge network devices 218 and orchestrate connectivity between devices of control plane 212 and data plane 216. In some examples, network orchestrator appliances 204 can also enable communication of devices located behind Network Address Translation (NAT). In some embodiments, physical or virtual Cisco^{®} SD-WAN vBond appliances can operate as network orchestrator appliances 204.

Management plane 206 can be responsible for central configuration and monitoring of a network. Management plane 206 can include analytics engine 208 and one or more physical or virtual network management appliances such as network management appliances 210. In some examples, network management appliances 210, based on one or more outputs of analytics engine 208, can provide centralized management of the network via a graphical user interface to enable a user to monitor, configure, and maintain edge network devices 218 and links (e.g., internet transport network 228, MPLS network 230, 4G/Mobile network 232) in an underlay and overlay network. Network management appliances 210 can support multi-tenancy and enable centralized management of logically isolated networks associated with different entities (e.g., enterprises, divisions within enterprises, groups within divisions, etc.). Alternatively or in addition, network management appliances 210 can be a dedicated network management system for a single entity. In some embodiments, physical or virtual Cisco^{®} SD-WAN vManage appliances can operate as network management appliances 210.

Control plane 212 can build and maintain a network topology and make decisions on where traffic flows. Control plane 212 can include one or more physical or virtual network control appliances such as network control appliances 214. Network control appliances 214 can establish secure connections to each edge network device 218 and distribute route and policy information via a control plane protocol (e.g., Overlay Management Protocol (OMP) (discussed in further detail below), Open Shortest Path First (OSPF), Intermediate System to Intermediate System (IS-IS), Border Gateway Protocol (BGP), Protocol-Independent Multicast (PIM), Internet Group Management Protocol (IGMP), Internet Control Message Protocol (ICMP), Address Resolution Protocol (ARP), Bidirectional Forwarding Detection (BFD), Link Aggregation Control Protocol (LACP), etc.). In some examples, network control appliances 214 can operate as route reflectors. Network control appliances 214 can also orchestrate secure connectivity in data plane 216 between and among edge network devices 218. For example, in some embodiments, network control appliances 214 can distribute crypto key information among edge network devices 218. This can allow the network to support a secure network protocol or application (e.g., Internet Protocol Security (IPSec), Transport Layer Security (TLS), Secure Shell (SSH), etc.) without Internet Key Exchange (IKE) and enable scalability of the network. In some embodiments, physical or virtual Cisco^{®} SD-WAN vSmart controllers can operate as network control appliances 214.

Data plane 216 can be responsible for forwarding packets based on decisions from control plane 212. Data plane 216 can include edge network devices 218, which can be physical or virtual edge network devices. Edge network devices 218 can operate at the edges various network environments of an organization, such as in one or more data centers 226, campus networks 224, branch office networks 222, home office networks 220, and so forth, or in the cloud (e.g., Infrastructure as a Service (IaaS), Platform as a Service (PaaS), SaaS, and other cloud service provider networks). Edge network devices 218 can provide secure data plane connectivity among sites over one or more WAN transports, such as internet transport networks 228 (e.g., Digital Subscriber Line (DSL), cable, etc.), MPLS networks 230 (or other private packet-switched network (e.g., Metro Ethernet, Frame Relay, Asynchronous Transfer Mode (ATM), etc.), mobile networks 232 (e.g., 3G, 4G/LTE, 5G, etc.), or other WAN technology (e.g., Synchronous Optical Networking (SONET), Synchronous Digital Hierarchy (SDH), Dense Wavelength Division Multiplexing (DWDM), or other fiber-optic technology; leased lines (e.g., T1/E1, T3/E3, etc.); Public Switched Telephone Network (PSTN), Integrated Services Digital Network (ISDN), or other private circuit-switched network; small aperture terminal (VSAT) or other satellite network; etc.). Edge network devices 218 can be responsible for traffic forwarding, security, encryption, quality of service (QoS), and routing (e.g., BGP, OSPF, etc.), among other tasks. In some embodiments, physical or virtual Cisco^{®} SD-WAN vEdge routers can operate as edge network devices 218.

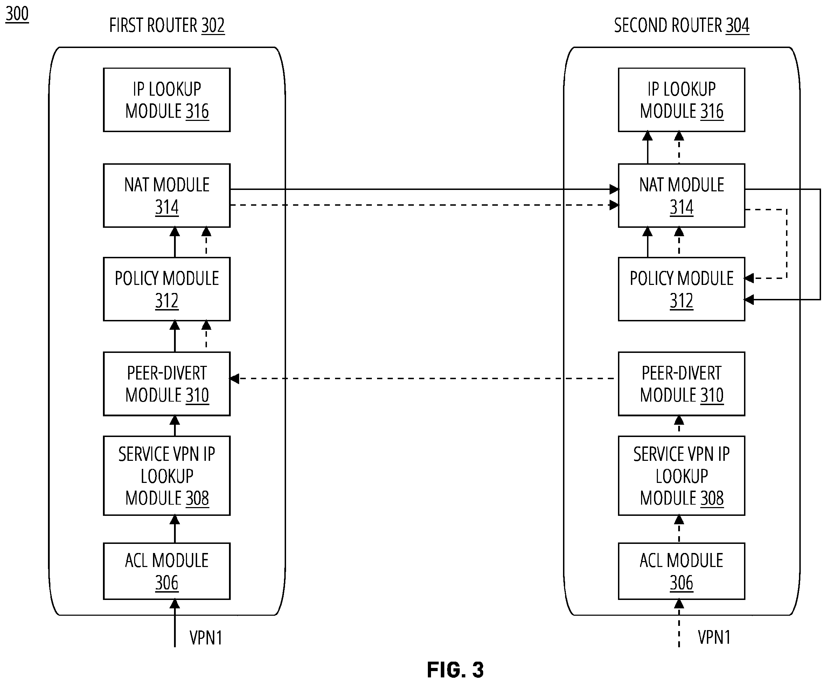

FIG. 3 illustrates an example environment 300 for implementing current methods of policy lookup in an HA cluster. In some examples, the environment 300 can include a first router 302 and a second router 304. In other examples, the environment 300 can include fewer or more routers than illustrated in FIG. 3. First router 302 and second router 304 may be used within communication network 100 of FIG. 1 and/or network architecture 200 of FIG. 2.

First router 302 and second router 304 can form a HA cluster. In some examples, first router 302 and second router 304 may form a redundancy group, such that, for a set of channels, at least one of first router 302 and second router 304 is available.

In this non-limiting example, first router 302 may be configured such that a redundancy group (RG) group 1 is active and an RG group 2 is standby. First router 302 may have two channels where a VPN1 is set to RG group 1 and a VPN2 is set to RG group 2. Additionally, a NAT pool may be set to RG group 2. Accordingly, first router 302 is active for RG group 1 and backup for RG group 2, and second router 304 is backup for RG group 1 and active for RG group 2.

When a data packet is received via VPN1 at first router 302, the data packet can first be processed by an access control list (ACL) module such as ACL module 306 that is configured to filter traffic to and from first router 302. The data packet can then be passed to a service VPN IP lookup module 308 to determine a specific IP address associated with VPN1. The data packet is then routed to a peer-divert module 310 to determine which router of the HA cluster (e.g., first router 302 or second router 304) should handle processing of the data packet.

In this example, since the data packet is received at first router 302 and first router 302 is active for VPN1 (e.g., the channel via which the packet is received), first router 302, at a policy module 312, performs a lookup on a policy table to determine a policy action associated with the data packet. For example, the policy action can define an operation to be carried out by first router 302 or second router 304 in routing the data packet through the network. In some examples, the policy table can be stored by a controller (e.g., a controller of control plane 212) communicatively coupled to first router 302 and second router 304.

In this example, because the NAT pool is active for RG group 2, the data packet is routed from first router 302 to a NAT module 314 of second router 304. However, in conventional systems, first router 302 cannot communicate the previously looked-up policy action of the data packet to second router 304. Accordingly, a second lookup to the policy table may be performed by the NAT module 314 of second router 304 to retrieve the policy action associated with the data packet. This results in additional processing time (e.g., lag time) in processing the data packet. Once the policy action is retrieved, NAT module 314 of second router 304 can transmit the data packet to an IP lookup module 316 to identify a destination IP address for the data packet.

In a similar example, described with reference to FIG. 3, a data packet can be received via a channel (e.g., VPN1) at second router 304. The data packet can be received at ACL module 306 of second router 304 for filtering. Service VPN IP lookup module 308 can determine a specific IP address associated with VPN 1. Peer-divert module 310 of second router 304 can determine that a state of second router 304 for the channel VPN1 is standby. Based on that determination, peer-divert module 310 of second router 304 can transmit the data packet to first router 302 for processing.

Policy module 312 of first router 302 can query a policy table to retrieve a policy action for handling the data packet, and NAT module 314 of first router 302 can transmit the data packet back to second router 304 based on a determination that first router 302 is standby for the NAT pool. The previously determined policy action is not transmitted to second router 304 from first router 302, and thus, policy module 312 of second router 304 must re-perform the lookup on the policy table, resulting in excess use of CPU power and additional time in processing the data packet. NAT module 314 of second router 304 can then transmit the data packet to IP lookup module 316 for determining a destination IP address and transmitting the data packet according to the policy action.

As described above, in both examples, redundant policy table lookups are executed by first router 302 and second router 304, resulting in inefficient use of computing resources and additional processing time. Disclosed examples address these deficiencies of current methods for processing data packets in an HA cluster by obviating the need for redundant policy lookups.

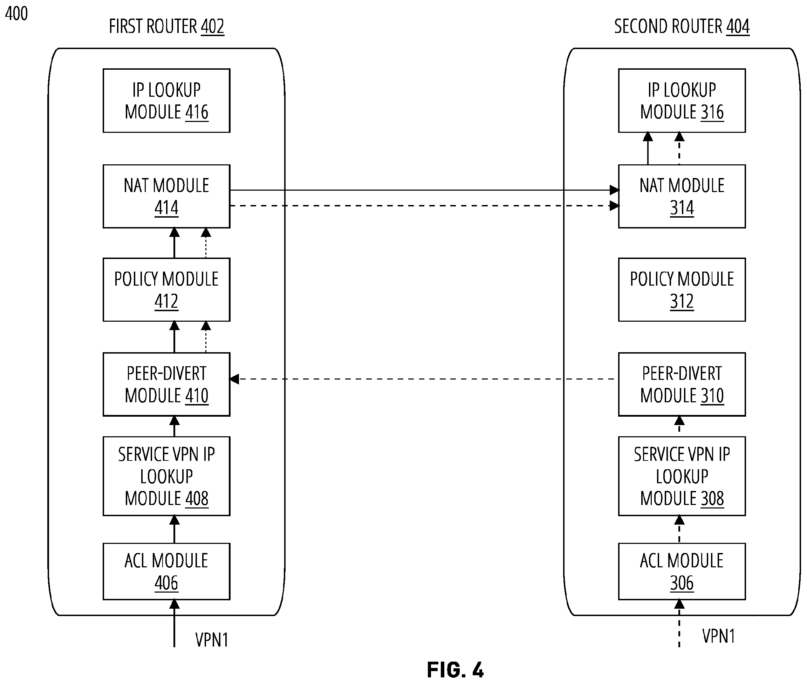

FIG. 4 illustrates an example environment 400 for routing a packet in an HA cluster in accordance with some aspects of the present disclosure. Number of routers and clusters is not limited to that shown in FIG. 4. A cluster may have more than two routers and the number of clusters maybe more than one. The first router 402 and the second router 404 may be the same as, or similar to, first router 302 and second router 304 described with reference to FIG. 3.

First router 402 and second router 404 can form a HA cluster. In some examples, first router 402 and second router 404 may form a redundancy group, such that, for a set of channels, at least one of first router 402 and second router 404 is available.

In this non-limiting example, first router 402 and second router 404 may be configured such that an RG group 1 is active and an RG group 2 is standby. First router 402 may have two channels where a VPN1 is set to RG group 1 and a VPN2 is set to RG group 2. Additionally, a NAT pool may be set to RG group 2. Accordingly, first router 402 is active for RG group 1 and backup for RG group 2, and second router 404 is backup for RG group 1 and active for RG group 2.

When a data packet is received via VPN1 at first router 402, the data packet can first be processed by an ACL module 406 configured to filter traffic to and from first router 402. ACL module 406 can be the same as, or similar to, ACL module 306. The data packet can then be passed to a service VPN IP lookup module 408 to determine a specific IP address associated with VPN1. Service VPN IP lookup module 408 can be the same as, or similar to, service VPN IP lookup module 308. The data packet is then routed to a peer-divert module 410 to determine which router of the HA cluster (e.g., first router 402 or second router 404) should handle processing of the data packet. Peer-divert module 410 may be the same as, or similar to, peer-divert module 310.

In this example, since the data packet is received at first router 402 and first router 402 is active for VPN1 (e.g., the channel via which the packet is received), first router 402, at a policy module 412, performs a lookup on a policy table to determine a policy action associated with the data packet. For example, the policy action can define an operation to be carried out by first router 402 or second router 404 in routing the data packet through the network. In some examples, the policy table can be stored by a controller (e.g., a controller of control plane 212) communicatively coupled to first router 402 and second router 404. Policy module 412 may be the same as, or similar to, policy module 312.

In this example, the policy action can be included in or appended to the header of the data packet. Thus, policy action information can be transmitted from first router 302 to second router 304. Since the NAT pool is active for RG group 2, the data packet (with the policy action in the header) is routed from first router 402 to a NAT module 414 of second router 404. Because the policy action is included in the header of the data packet, the second, redundant policy lookup does not need to be performed when the data packet is received at second router 404. Accordingly, NAT module 414 of second router 404 can process the data packet based on the received policy action and can transmit the data packet to an IP lookup module 416 to identify a destination IP address for the data packet based on the policy action and/or additional information associated with the data packet.

In a similar example, described with reference to FIG. 4, a data packet can be received via a channel (e.g., VPN1) at second router 404. The data packet can be received at ACL module 406 of second router 404 for filtering. Service VPN IP lookup module 408 can determine a specific IP address associated with VPN 1. Peer-divert module 410 of second router 404 can determine that a state of second router 404 for the channel VPN1 is standby. Based on that determination, peer-divert module 410 of second router 404 can transmit the data packet to first router 402 for processing.

Policy module 412 of first router 402 can query a policy table to retrieve a policy action for handling the data packet. NAT module 414 of first router 402 can include or append the policy action to a header of the data packet and can transmit the data packet back to second router 404 based on a determination that first router 402 is standby for the NAT pool. Thus, the policy action that was looked up by first router 402 is transmitted to second router 404, and thus, policy module 412 of second router 404 does not need re-perform the lookup on the policy table to process the data packet. NAT module 414 of second router 404 can then transmit the data packet to IP lookup module 416 for determining a destination IP address and transmitting the data packet according to the policy action.

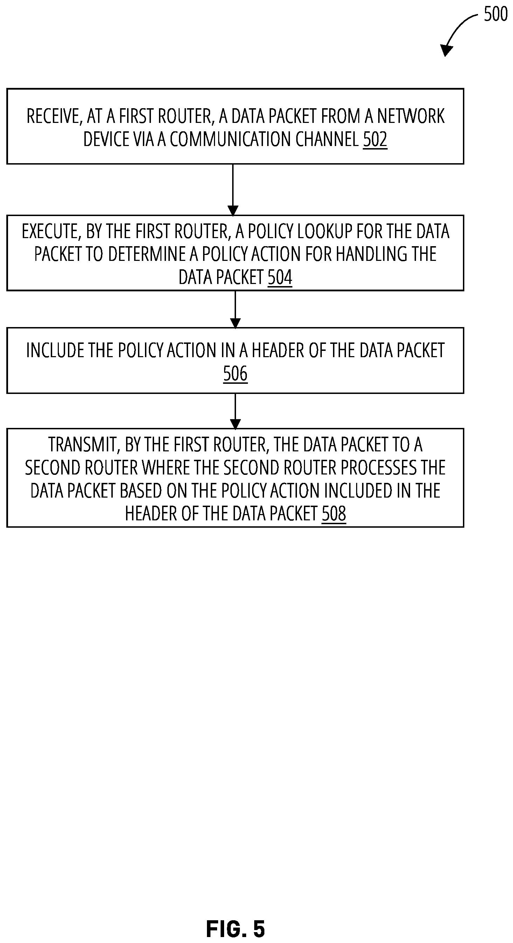

FIG. 5 will be described from the perspective of active router. It should be understood that such active router may have one or more memories having computer-readable instructions stored therein and one or more processors configured to execute the computer-readable instructions to perform steps of method 500 described below.

Furthermore, while first router 402 is used below as an example of a first router in an active state, method 500 can equally be performed from the perspective of second router 404 in active state and/or any other router in a cluster/network that is in an active state.

In block 502, method 500 receives, at a first router (e.g., first router 402), a data packet from a network device via a communication channel. The communication channel can be, for example, a VPN channel or other channel of first router 402. In some examples, first router 402 can be associated with a state for the communication channel (e.g., active or standby).

In block 504, method 500 executes, by the first router (e.g., first router 402), a policy lookup for the data packet to determine a policy action for handling the data packet. In some examples, the policy lookup can include querying, by first router 402, a policy table stored by a controller of the network (e.g., communication network 100). The policy table can store policy actions for routing different data packets. For example, each policy action can define one or more operations to be performed by a router for handling the data packet.

In block 506, method 500 includes, by the first router (e.g., first router 402), the policy action in a header of the data packet. For example, a NAT module (e.g., NAT module 414) can be configured to attach the policy action to the data packet. In some examples, the NAT module can attach the policy action to the data packet by appending the policy action to a header of the data packet, such as an A/R peer divert header, which can contain origin and destination information associated with the data packet. In another example, the policy action can be concatenated to content of the header of the data packet.

In block 508, method 500 transmits, by the first router (e.g., first router 402), to a second router (e.g., second router 404), where the second router processes the data packet based on the policy action included in the header of the data packet. In some examples, the second router processes the data packet without performing an additional policy lookup, thereby improving packet processing efficiency and reducing overhead. The second router may also be referred to as a remote router, a far-end router, and/or a connected router. As an example, the data packet is transmitted to a NAT module of the second router (e.g., NAT module 414 of second router 404) with the policy action included in the header. The NAT module of the second router may be configured to parse the header to determine the policy action (or actions) for the data packet and to execute a NAT action based on the policy action in the header. In some examples, processing the data packet based on the policy action can include routing or otherwise managing the data packet to execute one or more operations defined by the policy action.

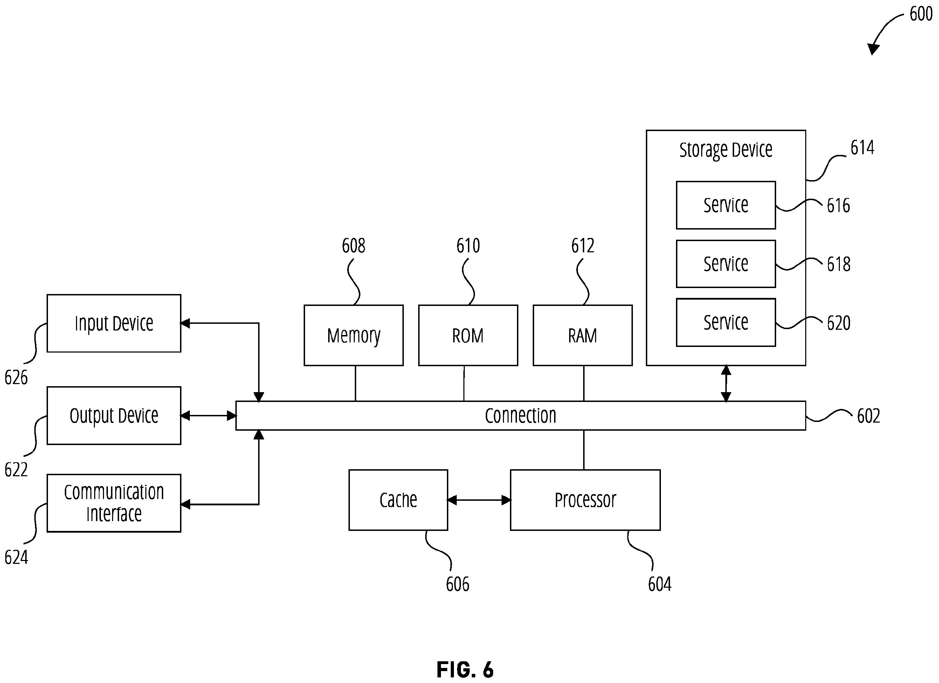

FIG. 6 illustrates an example network device in accordance with some aspects of the present disclosure. Example network device 600 can be any other device suitable for performing switching, routing, load balancing, and other networking operations, or any component of a computing device in which the components of the system are in communication with each other using connection 602. Connection 602 can be a physical connection via a bus, or a direct connection into processor 604, such as in a chipset architecture. Connection 602 can also be a virtual connection, networked connection, or logical connection.

Example network device 600 includes at least one processing unit (CPU) or processor such as processor 604 and connection 602 that couples various system components including system memory 608, such as read-only memory (ROM) such as ROM 610 and random access memory (RAM) such as RAM 612 to processor 604. Network device 600 can include a cache of high-speed memory 606 connected directly with, in close proximity to, or integrated as part of processor 604.

Processor 604 can include any general purpose processor and a hardware service or software service, such as service 616, service 618, and service 620 stored in storage device 614, configured to control processor 604 as well as a special-purpose processor where software instructions are incorporated into the actual processor design. Processor 604 may essentially be a completely self-contained computing system, containing multiple cores or processors, a bus, memory controller, cache, etc. A multi-core processor may be symmetric or asymmetric.

To enable user interaction, network device 600 includes an input device 626, which can represent any number of input mechanisms, such as a microphone for speech, a touch-sensitive screen for gesture or graphical input, keyboard, mouse, motion input, speech, etc. network device 600 can also include output device 622, which can be one or more of a number of output mechanisms known to those of skill in the art. In some instances, multimodal systems can enable a user to provide multiple types of input/output to communicate with network device 600. Network device 600 can include communication interface 624, which can generally govern and manage the user input and system output. There is no restriction on operating on any particular hardware arrangement, and therefore the basic features here may easily be substituted for improved hardware or firmware arrangements as they are developed.

Storage device 614 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

Storage device 614 can include software services, servers, services, etc., that when the code that defines such software is executed by processor 604, it causes the system to perform a function. In some embodiments, a hardware service that performs a particular function can include the software component stored in a computer-readable medium in connection with the necessary hardware components, such as processor 604, connection 602, output device 622, etc., to carry out the function.

In summary, in one aspect, a method includes receiving, at a first router, a data packet from a network device via a communication channel, executing, by the first router, a policy lookup for the data packet to determine a policy action for handling the data packet, including, by the first router, the policy action in a header of the data packet, and transmitting, by the first router, the data packet to a second router where the second router processes the data packet based on the policy action included in the header of the data packet.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

For clarity of explanation, in some instances the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program, or a collection of programs that carry out a specific function. In some embodiments, a service can be considered a server. The memory can be a non-transitory computer-readable medium.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, solid state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A method comprising:
receiving, at a first router, a data packet from a network device via a communication channel;
executing, by the first router, a policy lookup for the data packet to determine a policy action for handling the data packet;
including, by the first router, the policy action in a header of the data packet; and
transmitting, by the first router, the data packet to a second router wherein the second router processes the data packet based on the policy action included in the header of the data packet.

2. The method of claim 1, wherein the policy action is included in an A/R divert header of the data packet.

3. The method of claim 2, wherein a NAT module of the first router is configured to append the policy action to the header of the data packet.

4. The method of any of claims 1 to 3, wherein processing the data packet by the second router comprises using the policy action by a NAT module of the second router to route the data packet.

5. The method of any of claims 1 to 4, wherein the first router is in an active state and the second router is in a standby state.

6. The method of any of claims 1 to 5, wherein transmitting, by the first router, the data packet to the second router is determined based on a NAT pool state of the first router.

7. The method of any of claims 1 to 6, wherein the second router processes the data packet based on the policy action without executing an additional policy lookup for the data packet.

8. A router comprising:
means for receiving a data packet from a network device via a communication channel;
means for executing a policy lookup for the data packet to determine a policy action for handling the data packet;
means for including the policy action in a header of the data packet; and
means for transmitting the data packet to a remote router, wherein the remote router comprises means for processing the data packet based on the policy action included in the header of the data packet.

9. The router of claim 8, wherein the policy action is included in an A/R divert header of the data packet.

10. The router of claim 9, wherein a NAT module of the router comprises means for appending the policy action to the header of the data packet.

11. The router of any of claims 8 to 10, wherein the means for processing the data packet based on the policy action comprises means for using the policy action by a NAT module of the remote router to route the data packet.

12. The router of any of claims 8 to 11, wherein the router is in an active state and the remote router is in a standby state.

13. The router of any of claims 8 to 12, wherein the means for transmitting the data packet to the remote router comprises means for transmitting based on a NAT pool state of the router.

14. The router of any of claims 8 to 13, wherein the remote router comprises means for processing the data packet based on the policy action without executing an additional policy lookup for the data packet.

15. A computer program, computer program product or computer readable medium comprising instructions which, when executed by a computer, cause the computer to carry out the steps of the method of any of claims 1 to 11.
